Europäisches Patentamt

(19) European Patent Office

Office européen des brevets

(11) **EP 0 609 168 B1**

(12) **EUROPEAN PATENT SPECIFICATION**

(45) Date of publication and mention
of the grant of the patent:
**29.07.1998 Bulletin 1998/31**

(51) Int. Cl.$^6$: **C05F 11/10**, C05C 9/00,
C05G 3/02, C05F 11/00

(21) Application number: **94500010.7**

(22) Date of filing: **26.01.1994**

(54) **Organic amendment of natural origin capable of protecting plants from the agression of pathogens and of stimulatingplant growth**

Natürliches Verbesserungsmittel zum Schutz von Pflanzen gegen Pathogene und zur Stimulation des Pflanzenwachstums

Agent naturel de protection contre pathogènes et de stimulation de croissance pour plants

(84) Designated Contracting States:
**BE DE DK FR GB GR IE IT LU NL PT**

(30) Priority: **28.01.1993 ES 9300163**

(43) Date of publication of application:
**03.08.1994 Bulletin 1994/31**

(73) Proprietor:
**INDUSTRIAS Y ABONOS DE NAVARRA S.A.
E-31002 Pamplona (ES)**

(72) Inventors:
• **Garcia-Mina Freire, Jose Maria
E-31170 Iza, Navarra (ES)**
• **Jordana Butticaz, Rafael
Pamplona (ES)**
• **Hernandez Minguillon, Maria Angeles
Villaba, Navarra (ES)**

(74) Representative:
**Garcia Cabrerizo, Francisco
OFICINA GARCIA CABRERIZO S.L.
Vitruvio 23
28006 Madrid (ES)**

(56) References cited:
**EP-A- 0 298 136            WO-A-90/02719
US-A- 4 581 056**

• **DATABASE WPI Section Ch, Week 8431, Derwent Publications Ltd., London, GB; Class C03, AN 84-191008 & JP-A-59 106 401 (KINOGEN KK) 20 June 1984**

Remarks:
The file contains technical information submitted after the application was filed and not included in this specification

**Description**

The past three decades have witnessed a very important development of the entire chemical industry devoted to the obtention of new organic molecules of agricultural interest. This fact is especially clear in the sector of plant health products--the development of all types of pesticides--but it is also obvious in other related areas, such as fertilization.

Even so, although the use of these synthetic products has been significantly beneficial over the short term, their generalized, continuous use has ended up causing greater or lesser negative effects on the ecological balance and on human health, constituting a problem that in some cases is now of a magnitude unthinkable only a few years ago. For this reason there is the potential for all research, of basic or applied character, to be directed toward designing and obtaining alternative products that, due to their origin and/or nature, respect the natural ecological balance as well as the health and development of the human race.

In this context the agronomic and scientific sector is related to the content of the present patent project. In effect, one of the most serious problems affecting the agricultural sector in most developed countries is the significant reduction of production yields of a large number of crops, associated with the presence of different plant parasitic nematodes. For example, in 1982 in the U.S., the assessed economic losses derived from crop reductions caused by the negative effects of different species of parasitic nematodes stands at around 5 billion dollars. Similarly, in Spain, crop losses have been calculated at around 20-30% in a large number of crops, such as tobacco, sugar beet, wheat, potatoes, etc.

Currently, synthetic nematicides--ethyl bromide, dibromochloropropene carbamates, organophosphates--are often used which, due to their physicochemical properties (high toxicity; they are very active poisons), are extremely dangerous for the ecological system in which they are applied, as well as for the health of the men involved in their transport and application. In fact, there are now several countries--the U.S., the E.E.C.--that are planning to prohibit their use. Consequently, the development of new products effective in the control of this type of pest, and which at the same time do not pose significant ecological dangers, is urgently needed.

The object of the patent of the present report is a new product of natural origin whose peculiar physicochemical properties allow the combination of a determined biological action, with respect for the natural ecological balance of the system in which it is applied.

The new product is a complex organic substrate of natural origin whose chemical composition, which will be provided in detail as the present report is developed, has been studied and designed particularly to endow it with the following fundamental agronomic properties:

1. The presence of a series of active principles consisting of certain organic biomolecules, whose chemical structure is associated with a singular biological activity, allows it to effectively control certain plant parasitic agents present in the soil. This product thus protects plants from the negative effect that these parasites have mainly on root development and, consequently, on general growth. The organisms that have been studied to enable the design of this product are principally various species of plant parasitic nematodes.

2. It contains a series of organic molecules of natural origin that can significantly stimulate plant development, as well as activate the microbial flora and fauna of the soil.

3. It contains a series of inorganic elements that constitute basic nutrients for plant development.

Consequently, the mechanisms comprised in the plant-protective activity of this new product seem to act both directly on the parasitic agent and its reproductive cycle, and indirectly, by facilitating the proliferation in the soil's fauna of predators of the parasite species, and by significantly improving the plant's nutrition and, as a consequence, plant development.

Background

A large number of works have shown the different effects of mineral fertilizers on the fauna of soil, and more concretely on the nematodes present in it (see chapter of Bibliography (B); references 1, 2). In fact, several authors have observed the decrease of different species of parasitic nematodes in crops fertilized with high doses of potassium (see B, references 3, 4). Similarly, the application of different N-P-K complex fertilizers containing large quantities of calcium, while not changind the overall nematode population, did increase the nonplant-parasitic species, significantly diminishing the parasitic species (see B; reference 6). A similar effect was observed when important quantities of calcic amendments were applied (see B; reference 6).

Nevertheless, nitrogenous fertilizers are the mineral fertilizers that have proven to have the greatest effect on the development and population of different species of parasitic nematodes. Different works have demonstrated that certain inorganic types of nitrogen have the capacity to diminish significantly the number of plant parasitic nematodes present in soils, as well as the negative effects associated with their presence. This effect is associated with the increase of other species of nonparasitic nematodes, some of which are natural predators of these parasitic ones (see B; refer-

2

ences 1, 6, 7, 8, 9).

Indeed, different studies have shown that urea has a significant nematicidal action when it was applied at high concentrations--from 300 ppm (see B; references 10, 11) to 1000-3000 ppm (see B; reference 12). This nematicidal effect was also associated with the application of both anhydrous and liquid ammonia (see B; references 13, 14, 15). Different authors propose that ammoniacal and nitric types derived from the transformation of nitrogenous fertilizers in the soils are the main causes of the observed nematicidal effect (see B; references 7, 8, 9, 13, 14, 15), although indirect effects derived from their action on the fauna and microbial flora present in the soil could also intervene (see B; references 1, 6, 8).

Nevertheless, the use of these active forms of nitrogen as an effective medium for the control of this type of pests does not seem to be a viable procedure from an agronomic point of view. In fact, the large amounts that would have to be used to achieve at least sufficient results are incompatible with plant development due to their high phytotoxicity (see B; reference 8).

As in the case of the inorganic fertilizers, there are also many studies that have revealed the nematicidal effect of the different organic amendments of vegetable or animal origin (see B; references 1, 2, 8, 9, 16, 17, 18, 19, 20, 21, 22, 23, 24).

In effect, the capacity of different organic amendments to protect plants from attack by different parasitic agents, plant parasitic nematodes among them, is known (see B; references 1, 2, 8, 9, 16, 17, 18, 19, 20, 21, 22, 23, 24). Even though their mechanism of action is still not completely clear, different actions could be implicated: direct actions on the parasite and its reproductive cycle, and indirect actions consisting of favoring the proliferation of new species in the system's fauna, with the appearance of specific predators of the parasitic agents: fungi, predator nematodes, etc. (see B; references 1, 2, 8, 17, 18, 20).

Among the principal nematicidal organic amendments we can point out the following:

1. Manures: The capacity of certain manures to reduce the populations of parasitic nematodes in the soils where they are applied is a proven fact (see B; references 1, 2, 8, 22). The most effective of all of them seems to be horse manure, the effect of cow or sheep manure being more limited. The amounts used in all of the studies were greater than 20 tons/ha of moist product (see B; references 1, 2, 8, 22). Taking into account that horse manure is ordinarily the type that contains a higher concentration of nitrogen, and considering the nematicidal effect associated with certain forms of this element, it is not unlikely that nitrogen is involved in the mechanism responsible for the nematicidal action of these products, in addition to the actions mentioned above in dealing with organic amendments from a general point of view. Indeed, some authors have indicated that, in addition to the effect observed on edaphic fauna and flora, these organic amendments could act directly on the plant parasitic nematode species through the ammoniacal and nitric forms derived from the fermentation of the organic material-nitrogen system in the soil. Even so, the mechanism through which this action takes place is not perfectly known at this time (see B; references 1, 8).

The main problem of these products as valid alternatives in effectively controlling the blights produced by parasitic nematodes is the lack of homogeneity of the composition and chemical characteristics of the product; within a single field treated with apparently equal manures, very efficacious actions, along with the absolute lack of nematicial effect, can be observed.

2. Organic amendments with a significant nitrogen content. Importance of the carbon/nitrogen (C/N) quotient.

As we mentioned above in dealing with the effect of different manures on the population of plant parasitic nematodes, different authors have observed the possible nematicidal efficacy of systems composed of organic material and nitrogen (see B; reference 8). The works describing the nematicidal power of organic materials with a high nitrogen content coming from peptides and proteins are many (see B; references 8, 9, 10, 16, 18, 19, 20, 21). In this sense Rodriguez-Kabana et al. (see B; reference 18), describe the existence of a very significant correlation between the C/N quotients of different organic amendments and their nematicidal power. These authors observed that the affectation of the roots by the attack of plant parasitic nematodes diminishes very significantly as the C/N quotient of the organic amendments used drops (see B; reference 18). The main problem is that, in addition to nematicidal power, phytotoxicity also increases as the C/N quotient for a given dose diminishes; thus it is necessary to work with C/N quotients that allow a significant nematicidal power, yet without toxic effects on plant development.

Likewise, there are different patents that deal with combined systems of these organic materials with urea or other forms of ammoniacal nitrogen, as effective nematicidal agents. Ordinarily these products possess very small values of the C/N quotient (C/N < 8). The organic materials that were shown to be most effective were those with a significant content of chitin or other related mucopolysaccharides (see B; references 8, 18, 19, 20, 21).

The mechanism proposed as responsible for the nematicidal action of these compounds consists in the stimultation of the microbial flora capable of hydrolyzing chitin into chitobiose and N-acetylglucosamine, which takes place as a consequence of the addition of this substance to the soils. Later these substances are descomposed by the edaphic flora, producing the accumulation of forms of ammoniacal and nitric nitrogen as a result of the deamination of these sugars, which could have a toxic effect on the plant parasitic nematodes (see B; references 8, 18, 20). Likewise, different species of fungi capable of destroying nematode eggs have been observed to appear, and this action can be related to their capacity to hydrolize chitin, which is also present in the shells of said eggs (see B; references 8, 18, 20).

In relation to this type of product, the patent presented by Rodriguez-Kabana and Milch (1991) (see B; reference 25) is especially interesting. These authors protect a family of products consisting of the mixture of different forms of ammoniacal nitrogen, principally urea, with different vegetable flours, principally soy flour, and/or an N-acetylglucosamine-rich compound (chitin), principally by-products containing shells of crustacea, significantly rich in protein nitrogen.

An organomineral biostimulating fertilizer comprising an organic component containing humic and fulvic acids and having a C/N ratio between 10 and 20 is disclosed in the European patent application n° 0 298 136. But this fertilizer does not contain phenolic and polyphenolic acids other than humic and fulvic acids, and cytokin.

Fertilizer compositions comprising humic and fulvic acids, amoniacal and ureic nitrogen, vegetable wastes and zeatin are broadly disclosed in WO-A-9002719. These compositions are to be applied by vaporisation to the foliage of plants and not to the soil. Thus, the particular composition of the invention is not disclosed there.

Exposition of the new product.

Another possible method of study for designing nematicidal products of natural origin, which are inherent in the system where they are to be applied, consists of delving into the defense mechanisms that plants possess against this and other types of aggression, for the purpose of detecting the most efficacious products and being able to introduce them into the crop's environment.

Some authors have studied the microbial flora present in the rhizosphere of plants with nematicidal power (see B; references 2, 17, 26). In these studies it has been confirmed that the microbial flora corresponding to this type of plants are very different bacteria and microorganisms that seem to be antagonistic to the plant parasitic nematodes and that are present in the rhizosphere of plants with nematicidal power have also been studied (see B; reference 27). Nevertheless, new studies must still be awaited to obtain a natural predator--bacterium, fungus--eficacious in controlling these pests.

On the other hand, a large number of works have shown the presence of different phenols and polyphenols associated with defending plants against different aggression (see B; reference 28). In fact, one family of substances--the phytoalexins--that seem to be involved in the defense systems of plants, and whose toxicity seems to be associated with the presence of phenolic and polyphenolic groups (see B; reference 28), has been characterized. In this sense these chemical groups have also been characterized in the extracts of different plants that seem to posses an important insecticidal and nematicidal effect (see B; references 8, 29, 30, 31, 42). A fact that should be taken into account in relation to this family of products (phenolic and polyphenolic compounds) is its elevated phytotoxicity. In effect, different studies have revealed that, generally, this type of natural product is highly toxic at concentrations greater than 1 mM, on crops planted on different types of soil (see B; reference 32). In hydroponic crops the toxicity appeared for concentrations below what was indicated (see B; reference 32). However, a plant-development-stimulating effect has also been observed for concentrations below 1 mM (see B; references 32, 33). As a result, if these natural products are used for insecticidal or nematicidal purposes, it will be necessary to work with doses that, while maintaining a significant pesticidal power, do not present appreciable phytotoxicity.

We have not found any product patent that includes the use of phenolic and polyphenolic substances of natural origin for insecticidal and/or nematicidal purposes, although according to the bibliography (see B; reference 30), some phenolic and polyphenolic acids (tannins) present a certain nematicidal power.

Description of the product

It is an organic amendment consisting of some or all of the following fundamental components:

1. A partially moistened organic substrate of natural (animal or vegetable) origin, with a significant quantity of humic and fulvic acids, which can be presented in its natural form or in a more active form, by means of the formation of soluble inorganic salts.
2. Phenolic and polyphenolic acids of natural origin.
3. A source of ammoniacal nitrogen.
4. Zeatin

Justification of the product

Humic and fulvic acids are substances present in the soils as products of the maturation of the organic material incorporated into them. Numerous studies (see B; references 31, 32, 33, 34, 35, 36, 37) have demonstrated that these substances are capable of stimulating plant growth, as well as improving the nutrition of the plants by facilitating the transport of certain nutrients (especially Micronutrients). Nevertheless, the humic substances present in the majority of partially or totally humified organic amendments of agronomic interest are not very mobile, because the majority of their functional groups are blocked by inorganic elements present in the soils ($Fe^{2+}$, $Ca^{2+}$, etc.). For the purpose of potentiating and improving the agronomic efficacy of this product, soluble inorganic salts (principally ammoniacal and/or potassium salts) are formed during the manufacturing process. Consequently, the partially or totally moistened organic substrates that can be used are: lignites, leonardites, peats, composted vegetable or animal materials and/or residues, etc., or mixtures thereof.

Given the importance of phenolic and polyphenolic acids in plant defense mechanisms against pathogens, this product contains small amounts of these acids. The sources of these substances can be extracts of certain plants, vegetable or animal oils, agro-food industry by-products containing these substances, and those coming from biotechnological processes, either as principal or as secondary products; or mixtures of all or some of these.

Based on the previous comments about the nematicidal effect of different forms of nitrogen, a source of ammoniacal nitrogen (ammonia, sal ammoniac, and/or urea) is introduced into this product. The concentration is designed so that in the end product the C/N ratio is preferably between 10-20.

As can be observed, in the design of this product an attempt is made to combine the direct effects on the pathogenic agents (phenolic and polyphenolic acids and action of different forms of nitrogen) with other, indirect effects consisting of the stimulation of the fauna and microbial flora present in the soils (effect of the organic material-nitrogen association, possible appearance of organisms that affect the pathogenic agent and/or its reproductive cycle), and the strengthening of root development and of the plant in general (effect of zeatin and humic and/or fulvic acids; nutritive effect of nitrogen; contribution of different basic principles present as natural components of the moistened organic substrate).

This product is different from other patented products or those described in the bibliography:

* As was pointed out above in the Background section, the bibliography contains an important number of studies that describe the nematicidal effect of various organic amendments of animal or vegetable origin with a significant content of humic and fulvic acids (see B; references 1, 2, 8). Likewise, different authors have studied and confirmed the nematicidal effect of various forms of nitrogen, both organic and inorganic (see B; references 1, 2, 8). Nevertheless, we do not know of any published work or patent that contemplates the combined application of a partially or totally moistened organic substrate of natural origin and a source of ammoniacal nitrogen, for nematicidal purposes; although similar compositions may exist in another type of product designed especially with the objetive of improving animal or plant nutrition, not as a nematicidal agent.

* Other studies and patents describe products in which a determined type of organic material is applied along with a source of ammoniacal nitrogen for nematicidal purposes (see B; references 8, 19, 25, 38, 39, 40, 41). The fundamental difference between these products and that described in the present report consists of the type of organic material. Indeed, the organic material incorporated in the above-mentioned products is limited to vegetable and/or animal flours with a high protein-nitrogen content as well as a source of N-acetylglucosamine (chitin) or other similar mucopolysaccharides. None of these substrates--both due to their methods of obtention and by nature--possess a significant content of true humic and/or fulvic acids, in their natural form or in combination with cations that ease the mobility of this substance in the soils.

* The bibliography contains a series of works that deal with the possible intervention of various phenolic and polyphenolic acids in the defense mechanisms of plants against the aggression of numerous pathogens (see B; reference 28). In the same way, different authors have observed the presence of these substances in extracts of plants that possess a certain nematicidal and insecticidal power (see B; references 29, 30, 31). However, we have not found any publication or patent that contemplates the combined application of these substances with partially or totally moistened organic substrates and a source of ammoniacal nitrogen.

* Some authors have confirmed a significant nematicidal effect of zeatin on different crops (see B; reference 43). However, we have not found in the bibliography any work or patent that incorporates the combined application of this natural cytokinin with humified organic substrates and a source of ammoniacal nitrogen, in the presence or absence of phenolic and polyphenolic acids of natural origin.

Preferred realization of the invention

The present invention consists of an organic amendment of natural origin that at the same time has the capacity to stimulate plant growth and protect plants from the aggression of pathogens, consisting of: an organic substrate of natural (animal or vegetable) origin, whose humic and fulvic acids are found in their natural form or have been totally or partially mobilized by means of the formation of soluble inorganic salts with adequate cations (preferably with $NH^{4+}$ or $K^+$); a certain quantity of phenolic and polyphenolic acids of natural origin; a certain quantity of ammoniacal and/or ureic nitrogen; and a certain quatity of zeatin.

This organic amendment of natural origin preferably possesses the following composition, expressed on dry material:

a) Organic substrate--in its natural form or activated by means of the formation of water-soluble salts--80-95%.

b) The source of nitrogen should contribute a concentration of nitrogen preferably from 2.5-5%.

c) The source of phenolic and polyphenolic acids will contribute a concentration of these acids preferably between > 0-17%.

d) The zeatin will be incorporated into the substrate at a concentration preferably between > 0-3% of a solution with an activity of approximately 200 g/L BAP (benzyl-amino-purine equivalent).

To determine the final formula of the product, the following equations are used:

$$(\emptyset+NT)=100-(Z+P)$$

$$(\emptyset \, {}^{\yen}\%C)/(N1 \, {}^{\yen}\%Nt1)+(N2 \, {}^{\yen}\%Nt2)+ ... = (C/N)$$

$$NT = N1+N2...$$

where $\emptyset$ = organic substrate; NT = sources of ammoniacal and/or ureic nitrogen; N1, N2 = each one of the sources of nitrogen used respectively; %N1, %N2 = percentage of nitrogen contained in each one of the sources of this element that are introduced into the product respectively; Z = zeatin; P = phenolic and polyphenolic acids; %C = percentage of organic carbon in the organic substrate; C/N = carbon/nitrogen ratio. The formula is expressed in percentage of the end product.

To calculate the formula, the values of Z, P, and C/N are set, leaving only one source of nitrogen as the variable to be calculated. The %C is known through the prior analysis of the organic substrate to be used. The percentages of nitrogen of each one of the sources--%N1, %N2--are known through prior analysis of each one of them.

The organic amendment of natural origin forming the object of the present invention can include other nutrients in its composition: primary nutrients such as phosphorous and potassium, secondary nutrients such as calcium, magnesium, and micronutrients, for example copper, iron, zinc--as well as products aimed at regulating plant growth, for example abscisic acid, gibberellic acid, etc.

Finally, it need only be added that the present organic amendment can be applied in the form of powder or granules.

Description of tables and figures

Table I. Percentage of affection of the root by subjective evaluation in the field, kruskal-Wallis analysis.

Figure 1. Graphic representation of the results analized in Table I.

Table II. Evaluation of nodulation of the root, expressed on a scale of 1-10, Kruskal-Wallis analysis.

Figure 2. Graphic representation of the results analyzed in Table II.

Table III. Lenght and percentage of root affected and necrotized according to different treatments.

Figure 3. Graphic representation of the data of Table III.

Table IV. Number of total nematodes and of Meloidogyne sp. in each treatment.

Figure 4. Graphic representation of the data of Table IV.

Table V. Percentage of affectation and necrosis halfway through harvest and at end of harvest for each treatment.

Figure 5. Graphic representation of the data of Table V.

Examples

Example 1

Four parcels measuring 1.5 ha each were made; we will call them Emulsion, Manure, MO 0.5, and MO 1.1.

The experimental tests have been carried out in the following manner:

Emulsion: 1,3-D [1-3-dichloropropene] to liquid form for application in the soil in a quantity of 1.1 cans per hectare (110 liters/hectare). This test does not carry the organic amendment forming the object of the experimentation.

Manure: In this parcel, 1,3-D fumigant is added at a dose of 1.1 cans per hectare (110 liters/hectare) and, in addition, 30,000 kg/ha of manure with 40% moisture were added.

6

MO 0.5: In this parcel, 1,3-D fumigant is added at a dose of 0.5 cans per hectare (50 liters/hectare) and, in addition, 1,500 kg/ha of the organic amendment forming the object of the patent are added.

MO 1.1: In this parcel, 1,3-D fumigant is added at a dose of 1.1 cans per hectare (110 liters/hectare) and, in addition, 1,500 kg/ha of the organic amendment forming the object of the patent are added.

To evaluate the experimental results, a visual analysis was done at the end of the harvest, expressing the state of the roots in percentages of roots with and without gallnuts of Meloidogyne sp. Thirty plants were selected at random from each one of the parcels. Roots of 10 of those 30 plants were taken to the laboratory for the analysis of nodulation and necrosis. The Kruskal-Wallis test was applied to the tables resulting from these analyses.

Results:

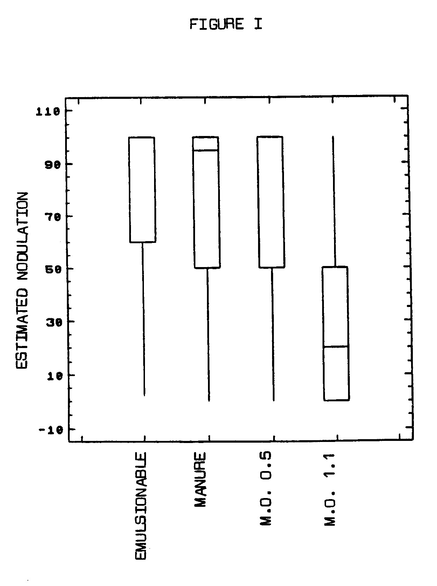

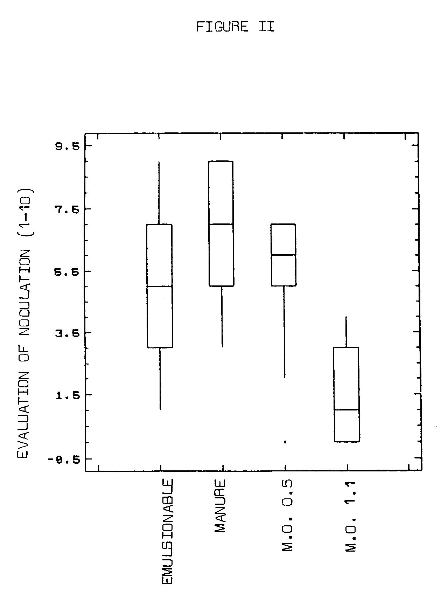

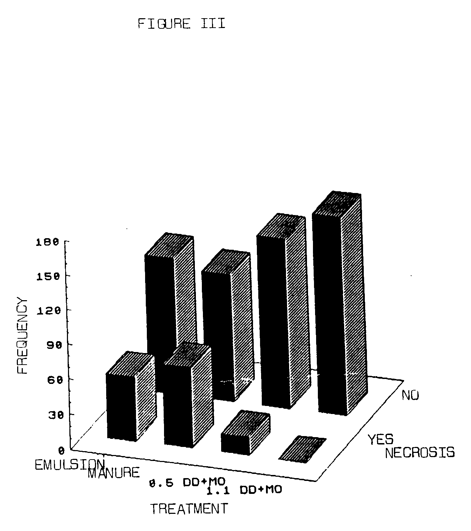

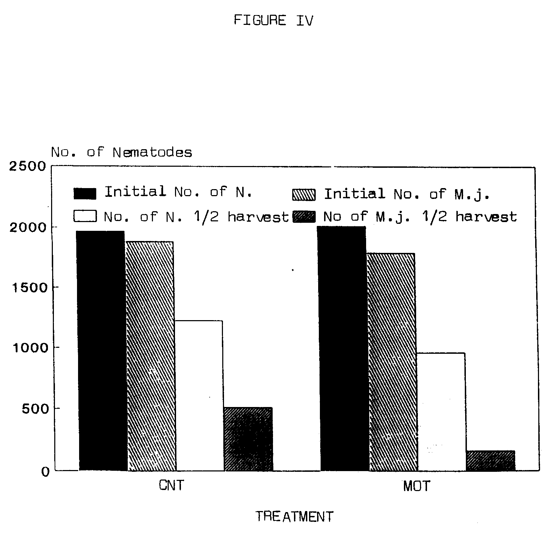

Figure 1 shows the percentage of nodulation (affected roots) in the four experimental parcels. In Table I the Kruskal-Wallis analysis for Figure 1 is expressed. As can be observed, the MO 1.1 treatment is the one presenting the least affliction, with a statistical significance of $p \leq 0.00044$.

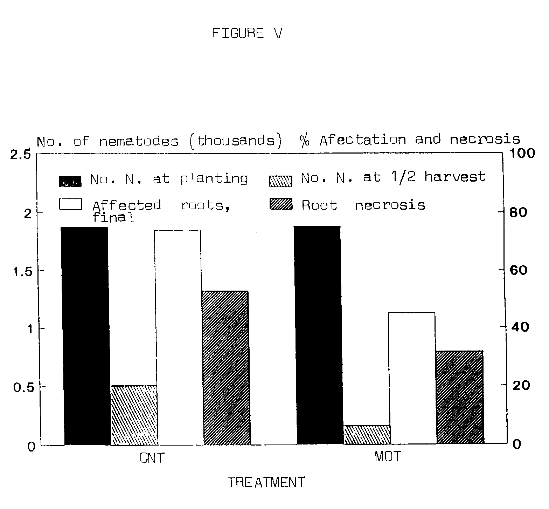

Figure 2 shows the evaluation of the nodulation, measured in the laboratory, expressed on a scale of 1-10 as a function of the intensity of nodulation and state of the root. Table II shows the Kruskal-Wallis analysis for Figure 2. As can be observed, treatment MO 1.1 presents the least nodulation, with a level of significance of $p \leq 0.00047$.

The Kruskal-Wallis analysis was also made for the three tests that did not show positive effects, and among them no significance was obtained.

Figure 3 shows the quantity of necrotized or nonnecrotized root, expressed in length for each one of the parcels. Table III provides the same data and the percentage of root necrosis and nonnecrosis. It can be observed that, in the treatments in which the organic amendment of the patent is present, it is reduced to 9.3% (MO 0.5) or is not produced (MO 1.1), whereas in the two other tests the necrosis stands at around 35%.

Example 2

Two treatments were realized for the study, each of 1.5 hectares. These treatments shall be referred to as follows:

CNT: Corresponds to the control treatment that has only the synthetic nematicide 1,3-D fumigant at a dose of 1.1 cans per hectare (110 liters/hectare).

MOT.: Corresponds to the test, which includes the synthetic nematicide 1,3-D fumigant--at a dose of 1.1 cans per hectare (110 liters/hectare)--and the product forming the object of the patent at the dose of 1,500 kg/ha.

For the evaluation of the results obtained in each one of the experimental parcels, the following parameters were evaluated:

1. The total number of nematodes and those corresponding to the parasitic species were analyzed in each one of the soils of the experimental parcels, before the tobacco plants were transplanted and after three months of harvest, which time corresponds to the plants' forming shooting. The nematodes were extracted by centrifugation, on a saccharose gradient, of three samples per parcel. Each of the 500-g samples was obtained by mixing 20 cylinders extracted from the parcel at random.

2. The degree of affectation and necrosis of the roots of 21 plants of each treatment, taken at random, were evaluated visually in the field. Both parameters were expressed as percentages referring to the entire root. These measurements were taken at the end of the harvest and three months after the plant was transplanted into the soil, which time corresponds to the shooting of the plant.

Results

In Table IV and Figure 4 the results of the analyses of the number of total nematodes present and the number of Meloidogyne sp. are gathered. It can be observed that the presence of the treatment with the product forming the object of this patent produces a 91.45% reduction, compared with the 73.06% reduction corresponding to the control treatment in which only the synthetic nematicide is present.

In Table V and Figure 5 the results of the percentage of affectation three months after transplant and at the end of harvest, and necrosis at the end of harvest, are gathered. In the two experiments, affliction three months after transplant is similar, whereas at the end of harvest the affliction of the control is 74.04% and that of the treatment with the product forming the object of the patent is 45.04%, the difference between them being 29%, with a significance of $p < 0.0046$, for a confidence limit of 95%.

Table V also shows that the difference in root necrosis at the end of harvest between the control and the treatment is 21.19%, with a significance of $p < 0.03$, for a confidence limit of 95%.

Example of manufacture

The amounts are expressed according to the formulation of the product of example 1, which has been described above. Basis of calculation: 1 kg.

1. One proceeds to the mixture-reaction of the organic substrate (Example 1: 915 g on dry matter and the different sources of nitrogen (Example 1: 54 g of urea) and of the system containing the cation that will neutralize the strong and weak acid groups of the humic substances present in the organic substrate used (Example 1: 25 of $NH^{4+}$ in a concentrated solution of ammonium hydroxide). This operation can be carried out continuously using a Lodige reactor-mixer. It is not necessary to supply energy, since the neutralization process is exothermic.
2. In this second phase the solutions--or solid precursors--containing the phenolic and polyphenolic acids are mixed (Example 1: 1.7 Eq/kg), as is the solution containing the zeatin.
3. All those components that one wishes to measure, in addition to the fundamental active principles, will be included in a third phase. If any of them is acidic, it is worthwhile to put this substance into the mixer prior to the neutralization-activation process (formation of soluble salts in water).

References

(1) Marshall, V.G. (1977). Effects of Manures and Fertilizers on Soil Fauna: A Review. C.A.B Special Publication N: 3 Commonwealth Agricultural Bureaux, England, pp. 79.

(2) Bridge, J. (1987). Control strategies in subsistence agriculture. In: "Principles and practice of nematode control in crops". Brown. R.H., Kerry, B.R. Eds. Academic Press, Sydney: 389-420.

(3) Sasser, J.N. (1972). Nematode diseases of cotton. In "Economic Namatology". Webster, J.M. Ed., Academic Press, London, pp. 187-214.

(4) Sivapalan, P. (1972). Nematode pests of Tea. In "Economic Namatology". Webster, J.M. Ed., Academic Press, London, pp. 285-311.

(5) Bassus, W. (1967). Der Einfluss von Meliorations - und Degungsmassnahmen auf die nematodenfauna verschiedener waldvvden. Pedobiologia., 7 : 280-295.

(6) Hyvvnen, R., Huhta, V. (1989). Effects of lime, ash and nitrogen fertilizers on nematode populations in Scots Pine forest soils. Pedobiology., 33 : 129-143.

(7) Walker, J.T. (1971). Populations of Pratylenchus panetrans relative to decomposing Nitrogenous Soil Amendments. J. Nematol., 3 : 43-49.

(8) Rodriguez-Kabana., R. (1986). organic and inorganic nitrogen amendments to soil as Nematode suppressants. J. Nematol., 18: 129-135. (and references in this publication).

(9) Gupta, M.C. (1988). Influence of Carbonaceous and Nitrogenous Amendments on population dynamics of Tylenchus and Criconemoides in soil. Indian J. Nematol., 18 : 207-211.

(10) Huebner., R.A., Rodriguez-Kabana, R., Patterson, M.R. (1983). Hemicellulosic waste and urea for control of plant parasitic nematodes : Effect on soil enzyme activities. Nematropica., 13 : 37-54.

(11) Rodriguez-Kabana, R., King, P.S. (1980). Use of mixtures of urea and blackstrap molasses for control of root-knot nematodes in soil. Nematropica., 10 : 38-44.

(12) Ortego Martinez, A., Gomez Gomez, J., Canovas Candel F. (1966). Nematicidal action of urea against Tylenchulus semipenetrans Cabb. Ann. Edafol. Agrobiol., 25:737-743.

(13) Eno, C.F., Blue, W.G., Good, J.M. (1955). The effect of anhidrous ammonia on nematodes, fungi, bacteria, and nitrification in some Florida soils. Proc. Soil Sci. Sor. Amer., 19 : 55-58.

(14) Rodriguez-Kabana, R., King, P.S., Pope, M.H. (1981). Combinations of anhidrous ammonia and Ethylene Dibromide for control of nematodes parasitic of soybeans. Nematropica., 11 : 27-41.

(15) Rodriguez-Kabana, R., Shelby, R.A., King, P.S., Pope, M.H. (1982). Combinations of anhidrous ammonia and 1,3-Dichloropropenes for control of root-knot nematodes in soybean. Nematropica., 12 : 61-69.

(16) Walker, J.T. (1969). Pratylenchus panetrans (Cobb) populations as influenced by microorganisms and soil amendments. J. Nematol., 1 : 260-264.

(17) Sikora, R.A. (1992). Management of the antagonistic potential in agricultural ecosystems for the biological control of plant parasitic nematodes. Ann. Rev. Phytopathol., 30 : 245-270.

(18) Rodriguez-Kabana, R., Morgan-Jones, G., Chet, I. (1987). Biological control of nematodes : Soil amendments and microbial antagonists. Plant. Soil, 100 : 237-247.

(19) Spiegel, Y., Cohn, E., Chet, I. (1986). Use of chitin for controlling plant parasitic nematodes. I. Direct effects on

# EP 0 609 168 B1

nematode reproduction and plant performance. Plant. Soil., 95 : 87-95.

(20) Spiegel, Y., Chet, I., Cohn, E. (1987). Use of chitin for controlling plant parasitic nematodes. II. Mode of action. Plant. Soil., 98 : 337-345.

(21) Spiegel, Y., Chet, I., Cohn, E., Galper, S., Sharon, E. (1988). Use of chitin for controlling plant parasitic nematodes. III. Influence of temperature on nematicidal effect, mineralization and microbial population build up. Plant. Soil., 109 : 251-256.

(22) Jonathan, E.I., Krishnamoorthy, S.V., Mandharan, M.L., Muthukrishnan K. (1991). Effect of organic amendments on the control of sugarcane nematodes. Bharatiya Sugar., 16 : 37, 39-40.

(23) Pandey, G., Singh, K.P. (1990). Effect of organic amendments on soil microflora and nematode fauna with special reference to Meloidogyne incognita in chick pea. New Agriculturist., 1 : 65-70.

(24) Weiss, B., Larink, O. (1991). Influence of sewage sludge and heavy metals on nematodes in an arable soil. Bio. Fertil. Soils., 12 : 5-9.

(25) Rodriguez-Kabana, R., Milch, R.A. (1991). Compositions for biological control of plant pathogenic nematodes. United States Patent., 5.057,141., pp. 30.

(26) kloepper, J.W., Rodriguez-Kabana, R., McInroy, J.A., Collins, D.J. (1991). Analysis of populations and physiological characterization of microorganisms in rhizospheres of plants with antagonistic properties to phytopathogenic nematodes. Plant. Soil., 136 : 95-102.

(27) Kloepper, J.W., Rodriguez-Kabana, R., McInroy, J.A., Young, R.W. (1992). Rizosphere bacteria antagonistic to soybean cyst (heterodera glycines) and root-knot (Meloidogyne incognita) nematodes : Identification by fatty acid analysis and frequency of biological control activity. Plant. Soil., 139 : 75-84.

(28) Nicholson, R.L., Hammerschmidt, R. (1992). Phenolic compounds and their role in disease resistance. Ann. Rev. Phytopathol., 30 : 369-389.

(29) Delaveau, P., áVidal-Tessier, A.M. (1988). Constituants secondaires a activite biologique du bois de quelques especes tropicales. Bull. Soc. Bot. Fr., 135 : 25-36.

(30) Alam, M.M., Khan, A.M., Saxena, S.K. (1979). Mechanism of control of plant parasitic nematodes as a result of the application of organic amendments to the soil. Indian J. Nematol., 9 : 136-142.

(31) Badra, T., Elgindi, D.M. (1979). The relationship between phenolic content and Tylenchulus semipenetrans populations in nitrogen-amended citrus plants. Revue de Nematologie., 2 : 161-164.

(32) Hartley, R.D., Whitehead, D.C. (1985). Phenolic acids and their influence on plant growth and soil microbial processes.

(33) Flaig, W. (1965). Effect of lignin degradation products on plant growth. In "Isotopes and Radiation in Soil-Plant Nutrition Studies". Proceedings Symp., IAEA, Vienna., pp. 3-19.

(31) Aiken, G.R., McKinght, D., Wershaw, R.L., MacCarthy, P. Eds. (1985). Humic Substances in Soil, Sediment, and Water : Geochemistry, Isolation, and Characterization. Wiley-Interscience. New York, 692 pp.

(32) Stevenson, F.J. (1982). Humus Chemistry: Genesis, Composition, Reactions. Wiley-Interscience. New York, 433 pp.

(33) Kononova, M.M. (1966). Soil Organic Matter. Pergamon Press. Elmsford, New York, 544 pp.

(34) Schnitzer, M., Khan, S.U. (1972). Humic Substances in the Environment. Marcel Dekker. New York, 327 pp.

(35) Schnitzer, M., Khan, S.U. Fds.(1978, 1985). Soil Organic Matter. Elsevier. New York, 319 pp.

(36) MacCarthy, P., Clapp, C.E., Malcolm, R.L., Bloom, P.R. Eds. (1990). Humic Substances in Soil and Crop Sciences : Selected Readings. Amer. Soc. Agron. Madison, 281 pp.

(37) Vaughan, D., Malcolm, R.E. (1985). Influence of humic substances on growth and physiological processes. In "Soil Organic Matter and biological Activity". Vaughan, D., Malcom, R.E. Eds., Martinus Nijhoff Pub., Dordrecht., Developments in Plant and Soil Sciences Vol 16. : 37-76.

(38) Kodama et al. (1972). U.S. Patent N: 3,660,571

(39) McBrayer, J.M. (1974). U.S. Patent N: 4,442,092

(40) Carlile et al. (1890). U.S. Patent N: 434,243

(41) McCandliss et al. (1985). U.S. Patent N: 4,536,207

(42) Sitaramaiah, K., Singh, R.S. (1978). Effect of organic amendment on phenolic content of soil and plant and response of Meloidogine javanica and its host to related compounds. Plant Soil, 50: 671-679.

(43) Featonby-Smith, B.C., Staden, J. Van (1983). The effect of seawed concentrate on the growth of tomato plants in nematode-infested soil. Scientia Horticulturae, 20: 137-146.

TABLE I

| TREATMENT | PLANTS MEASURED | AVERAGE (RANGES) |
|---|---|---|
| EMULSIONABLE | 30 | 71.9167 |
| MANURE | 30 | 68.8667 |
| M.O. + 0.5 DD | 30 | 70.1333 |
| M.O. + 1.1 DD | 31 | 33.9839 |
| Statistic = 27.5852. Level of significance = 0.00044. There are significant differences among the four treatments. | | |

TABLE II

| TREATMENT | PLANTS MEASURED | AVERAGE (RANGES) |
|---|---|---|
| EMULSIONABLE | 10 | 22.2500 |
| MANURE | 10 | 29.5000 |
| M.O. + 0.5 DD | 10 | 22.1500 |
| M.O. + 1.1 DD | 10 | 8.10000 |
| Statistic = 17.8691. Level of significance = 0.00047. There are significant differences among the four treatments. | | |

**TABLE III**

| TREATMENT | WITHOUT NECROSIS | WITH NECROSIS | |
|---|---|---|---|
| EMULSION | 118<br>68.6% | 54<br>31.4% | 172<br>25.1% |
| MANURE | 110<br>61.8% | 68<br>38.2% | 178<br>26.0% |
| M.O. 0.5 | 147<br>90.7% | 15<br>9.3% | 162<br>23.7% |
| M.O. 1.1 | 172<br>100.0% | 0<br>0% | 172<br>25.1% |
| PLANTS TOTAL | 547<br>80.0% | 137<br>20.0% | 684<br>100.0% |

TABLE IV

| | Transplant | | | 1/2 Harvest | | |
|---|---|---|---|---|---|---|
| | T. Nem. | M.j. | %M.j. | T. Nem. | M.j. | %M.j. |
| CNT | 1966 | 1878 | 95.54 | 1222 | 506 | 37.48 |
| MOT | 2014 | 1883 | 88.54 | 955 | 161 | 16.85 |
| T. nem = Total Nematodes<br>M.j. = Meloidogine javanica nematodes | | | | | | |

TABLE V

| | Affectation at 1/2 harvest | Final affectation | Final necrosis |
|---|---|---|---|
| CNT | 36.63% | 74.04% | 52.85% |
| MOT | 36.69% | 45.04% | 31.67% |

## Claims

1. Composition for application on soil of the type comprising an organic substrate containing humic and fulvic acids and source (s) of nitrogen and having a C/N ratio between 10 and 20, characterized in that it comprises:

   - 80-95 dry weight percent of the organic substrate on the basis of the dry weight of the composition,
   - 2,5-5 dry weight percent of nitrogen on the basis of the dry weight of the composition, from a source of amoniacal and/or ureic nitrogen,
   - > 0-17 dry weight percent of phenolic and polyphenolic acids of natural origin different from humic and fulvic acids, and
   - > 0-3 dry weight percent of zeatin.

2. Composition according to claim 1, characterized in that the humic and fulvic acids are in the form of their soluble inorganic salts.

3. Composition according to claim 1 or 2, characterized in that the nitrogen is from amoniacal source.

4. Composition according to claim 1 or 2, characterized in that the nitrogen is from urea.

5. Composition according to anyone of the preceeding claims, characterized in that it further comprises inorganic nutriments.

## Patentansprüche

1. Zusammensetzung zur Aufbringung auf den Boden, welches ein organisches Substrat umfasst, das Huminsäure und Fulvinsäure und eine Stickstoffquelle (s) enthält, mit einem C/N-Verhältnis zwischen 10 und 20, dadurch gekennzeichnet dass es:

   - 80 bis 95 Trockengewichtsprozent des organischen Substrates hinsichtlich des Trockengewichtes der Zusammensetzung,
   - 2,5 bis 5 Trockengewichtsprozent Stickstoff hinsichtlich des Trockengewichtes der Zusammensetzung, der aus einer Ammoniak- und/ oder Harnstoff-Stickstoffquelle stammt,
   - 0 bis 17 Trockengewichtsprozent Phenol- und Polyphenolsäure natürlichen Ursprungs, verschiedene von Humin- und Fulvinsäuren, sowie
   - 0 bis 3 Gewichtsprozent Zeatin enthält.

2. Zusammensetzung gemäss Anspruch 1, dadurch gekennzeichnet, dass die Humin- und die Fulvinsäure in Form ihrer anorganischen löslichen Salze vorliegen.

3. Zusammensetzung gemäss Anspruch 1 oder 2, dadurch gekennzeichnet, dass der Stickstoff aus einer Ammoniakquelle stammt.

4. Zusammensetzung gemäss Anspruch 1 oder 2, dadurch gekennzeichnet, dass der Stickstoff aus Harnstoff stammt.

5. Zusammensetzung gemäss einem der vorangehenden Ansprüche, dadurch gekennzeichnet, dass es ausserdem anorganische Nährstoffe enthält.

## Revendications

1. Composition pour application sur le sol, du type comprenant un substrat organique qui contient des acides humique et fulvique et une source (s) d'azote, et dont la teneur C/N est comprise entre 10 et 20, se caractérisant en ce qu'elle comprend:

   - 80 à 95 pour cent en poids sec du substrat organique par rapport au poids sec de la composition,
   - 2,5 à 5 pour cent en poids sec d'azote par rapport au poids sec de la composition, provenant d'une source d'azote ammoniacale et/ou urique,
   - 0 à 17 pour cent en poids sec d'acides phénolique et polyphénolique d'origine naturelle, différents des acides humique et fulvique, et

- 0 à 3 pour cent en poids de zéatine.

2. Composition selon la revendication 1, se caractérisant en ce que les acides humique et fulvique ont la forme de leurs sels inorganiques solubles.

3. Composition selon la revendication 1 ou 2, se caractérisant en ce que l'azote provient d'une source ammoniacale.

4. Composition selon la revendication 1 ou 2, se caractérisant en ce que l'azote provient d'urée.

5. Composition selon l'une quelconque des revendications précédentes, se caractérisant en ce qu'elle comprend de plus des substances nutritives inorganiques.

FIGURE I

FIGURE II

FIGURE III

FIGURE IV

No. of Nematodes

Legend:
- Initial No. of N.
- Initial No. of M.j.
- No. of N. 1/2 harvest
- No of M.j. 1/2 harvest

TREATMENT

CNT    MOT

FIGURE V

No. of nematodes (thousands)   % Afectation and necrosis

Legend: No. N. at planting / No. N. at 1/2 harvest / Affected roots, final / Root necrosis

TREATMENT: CNT, MOT